# EUROPÄISCHE PATENTANMELDUNG

(11) **EP 0 861 700 A1**
(43) Veröffentlichungstag der Anmeldung: **02.09.1998**
(21) Anmeldenummer: 97117852.0
(22) Anmeldetag: 15.10.1997
(51) Int. Cl.: B23B 27/16

(54) **Schneidplatte und Halter für eine Schneidplatte**

(30) Priorität: 27.02.1997 DE 19707895
(71) Anmelder: HARTMETALL-WERKZEUGFABRIK PAUL HORN GMBH, D-72072 Tübingen (DE)
(72) Erfinder: Hermes, Dieter, 72108 Wurmlingen (DE)
(74) Vertreter: Patentanwälte Bartels und Partner

(57) **Zusammenfassung**

Bei einer Schneidplatte (1) mit einer Schneidkante (2), einer beim Zerspanungsvorgang die Spanfläche bildenden Oberseite (21), einer Unterseite (12), einer beim Zerspanungsvorgang die Freifläche bildenden Vorderseite (25), die gegenüber der Oberseite (21) zur Bildung eines Keilwinkels (γ) geneigt ist, sowie mit einer Klemmfläche (10) zum Spannen der Schneidplatte (1) weist die Klemmfläche (10) gegenüber der Ebene der Oberseite (21) eine Neigung in einem ersten Neigungssinn, der zum Neigungssinn der Freifläche gegenüber der Oberseite (21) gleichsinnig ist, sowie eine zusätzliche Neigung in einem zum ersten Neigungssinn senkrechten Neigungssinn auf.

## Beschreibung

Die Erfindung betrifft eine Schneidplatte gemäß dem Oberbegriff des Anspruches 1 sowie einen Halter mit einer entsprechenden Schneidplatte.

Schneidplatten dieser Art, bei denen die Klemmfläche, an der Spannvorrichtungen angreifen können, in einem Neigungssinn geneigt ist, der dem Neigungssinn der Freifläche gegenüber der die Spanfläche bildenden Oberseite der Schneidplatte entspricht, sind bereits durch die DE 34 10 284 C2 bekannt. Zweck der Neigung der Klemmfläche ist es, die sichere Anlage der gespannten Schneidplatte an einer Anlagefläche des betreffenden Halters zu begünstigen.

Der Erfindung liegt die Aufgabe zugrunde, eine Schneidplatte zur Verfügung zu stellen, bei der bezüglich der Spannung am Halter ein besonderes Maß an Sicherheit gewährleistet ist. Ferner soll ein entsprechender Halter zur Verfügung gestellt werden.

Diese Aufgabe ist erfindungsgemäß durch eine Schneidplatte mit den Merkmalen des Anspruches 1 bzw. durch einen Halter für eine Schneidplatte mit den Merkmalen des Anspruches 10 gelöst.

Dadurch, daß erfindungsgemäß für die Klemmfläche eine Orientierung gewählt ist, die relativ zur Ebene der Spanfläche nicht nur eine zum Neigungssinn der Freifläche gleichsinnige Neigung aufweist, sondern auch in einem hierzu quer gerichteten Neigungssinne geneigt ist, ergeben sich durch den Spannvorgang zwischen Schneidplatte und Halter wirksame Kraftkomponenten, die sowohl das Anpressen der Rückseite der Schneidplatte gegen eine entsprechende Anlagefläche des Halters als auch eine Querkraft bewirken, die bei entsprechender Gestaltung der Anlageflächen des Halters eine verbesserte seitliche Fixierung der Schneidplatte ermöglicht, so daß durch die kombinierten Neigungen der Klemmfläche eine besonders sichere Spannmöglichkeit geboten ist.

Vorzugsweise beträgt der Winkel β der zweiten, seitlichen Neigung zwischen 10° und 30°. Besonders geeignet ist ein Winkel β von 15°.

Bei Ausführungsbeispielen, bei denen die Klemmfläche an einer Ausnehmung von im wesentlichen halbzylindrischer Gestalt, die zur Rückseite hin offen ist, angeordnet ist, ist ein besonders einfaches und sicheres Spannen der Schneidplatte möglich. Die zum Spannen verwendete Schraube muß bei einem Wechsel der Schneidplatte nur so weit herausgeschraubt werden, daß die benutzte Schneidplatte entnommen und eine neue Schneidplatte eingesetzt werden kann. Beim Anziehen der Schraube wird die Schneidplatte aufgrund der geneigten Anordnung der Klemmfläche selbsttätig richtig positioniert.

Bei einem vorteilhaften Ausführungsbeispiel erhöht die parallele Anordnung zweier Ausnehmungen an der Rückseite der Schneidplatte die Sicherheit beim Spannen derselben. Bei der parallelen Anordnung ist darauf zu achten, daß die Klemmflächen beider Ausnehmungen nicht spiegelbildlich zueinander geneigt sind, sondern daß die Längsachsen der beiden Ausnehmungen, und dementsprechend die Längsachsen der den Ausnehmungen zugeordneten Spannschrauben, parallel zueinander verlaufen. Es versteht sich, daß beliebig viele Ausnehmungen nebeneinander angeordnet werden können.

Die Ausrichtung der Schneidplatte in einem Halter kann durch eine weitere nach hinten offene Ausnehmung an der Rückseite der Schneidplatte vereinfacht werden. Falls im dazugehörigen Halter eine entsprechende Kontur der Anlagefläche vorgesehen ist, kann auf diese Weise die Schneidplatte schnell positioniert werden. Dabei sollte die weitere Ausnehmung etwa mittig zwischen den Ausnehmungen zum Spannen der Schneidplatte angeordnet sein, sofern mehrere entsprechende Ausnehmungen vorhanden sind. Eine besonders gute Positionierbarkeit wird durch einen senkrechten Verlauf der Längsachse der weiteren Ausnehmung bezüglich der Unterseite der Schneidplatte gewährleistet. Dies kann zusätzlich durch eine sich in Richtung der Unterseite verjüngende Form dieser Ausnehmung unterstützt werden.

Eine ballige Ausgestaltung der Rückseite der Schneidplatte, also der Zwischenflächen zwischen den Ausnehmungen, ermöglicht eine optimale Anlage an den Anlageflächen des Halters.

Vergleichbare Vorteile bietet ein Halter, in dem eine entsprechend ausgestaltete Schneidplatte angeordnet ist.

Im folgenden wird die Erfindung anhand eines Ausführungsbeispiels unter Bezugnahme auf die beiliegenden Zeichnungen näher erläutert. Es zeigen
- Fig. 1: eine Draufsicht auf eine Schneidplatte,
- Fig. 2: eine Ansicht der Rückseite der Schneidplatte von Fig.1,
- Fig. 3: einen Schnitt entlang der Linie III-III von Fig. 2,
- Fig. 4: einen Schnitt entlang der Linie IV-IV von Fig. 1 und
- Fig. 5: einen Halter.

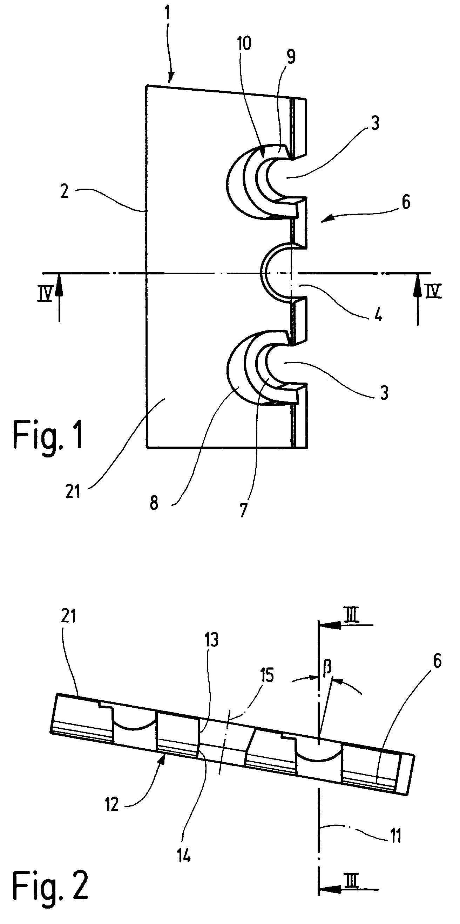

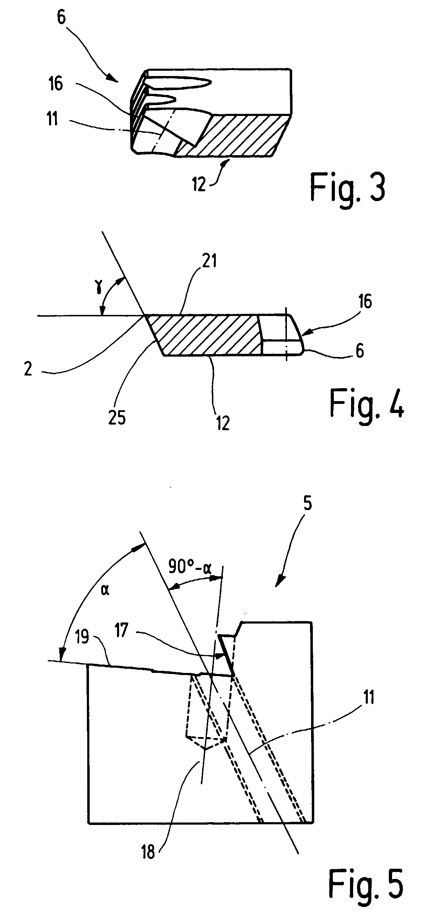

Fig. 1 zeigt eine Schneidplatte 1 mit einer Schneidkante 2, zwei Ausnehmungen 3 zum Spannen der Schneidplatte 1 und einer weiteren Ausnehmung 4 zum Zentrieren der Schneidplatte 1 in einem Halter 5 (vgl. Fig.5).

Wie am besten aus Fig. 4 zu ersehen ist, ist die beim Zerspanungsvorgang die Freifläche bildende Vorderseite 25 gegenüber der Oberseite 21, welche beim Zerspanungsvorgang die Spanfläche bildet, zur Bildung eines Keilwinkels γ geneigt. Die auf der der Schneidkante 2 gegenüberliegenden Rückseite 6 angeordneten Ausnehmungen 3 zum Spannen der Schneidplatte 1 sind in Richtung der Rückseite 6 offen. Die Kontur der Ausnehmungen 3 weist im wesentlichen jeweils zwei etwas in Richtung der Schneidkante 2 verschobene Halbzylinder 7 und 8 mit unterschiedlichen Durchmessern auf. Die Halbzylinder 7 und 8 haben eine gemeinsame Längsachse 11. Zwischen den beiden Halbzylindern 7 und 8 liegt eine einen Absatz 9 bildende Klemmfläche 10. Die Fläche 10 verläuft senkrecht zur Längsachse 11 der beiden Halbzylinder 7 und 8. Diese Längsachse 11 ist gegenüber der Ebene der die Spanfläche bildenden Oberseite 21 in einem ersten Neigungssinn geneigt, der zu dem Neigungssinn der Freifläche (Vorderseite 25) gegenüber der Spanfläche (Oberseite 21) gleichsinnig ist. Die Längsachse 11 ist ferner um einen Winkel β von 10° in einem zu diesem Neigungssinn senkrechten zweiten Neigungssinn geneigt (vgl. Fig.2). Der Halbzylinder 7, der einen kleineren Durchmesser als der Halbzylinder 8 hat, ist in Richtung der Unterseite 12 der Schneidplatte 1 angeordnet.

Die Ausnehmung 4 zum Zentrieren der Schneidplatte 1 hat die Kontur eines in Längsrichtung halbierten Kegelstumpfs 13, der auf seiner spitz zu laufenden Seite in einem Halbzylinder 14 endet. Der halbe Kegelstumpf 13 und der halbe Zylinder 14 haben eine gemeinsame Längsachse 15. Diese Längsachse 15 verläuft senkrecht zur Unterseite 12 der Schneidplatte 1.

Die Rückseite 6 der Schneidplatte 1 ist leicht zur Schneidkante 2 hin geneigt und hat ballige Anlageflächen 16, die in eingebautem Zustand an einer Anlagefläche 17 des Halters 5 anliegen.

Die Befestigung der Schneidplatte 1 in dem Halter 5 erfolgt mittels zweier Schrauben (nicht dargestellt), die in den Ausnehmungen 3 angeordnet sind. Die Längsachsen der Schrauben, die mit den Längsachsen 11 der Halbzylinder 7 und 8 zusammenfallen, verlaufen mit einer Neigung im oben erwähnten ersten Neigungssinn, der in Fig. 5 ersichtlich ist, unter einem Winkel von 90°-α gegenüber der Senkrechten 18 zur Unterseite 12 der Schneidplatte 1 bzw. der entsprechenden Anlagefläche 19 des Halters 5. Außerdem sind die Längsachsen 11 in dem hierzu quer verlaufenden zweiten Neigungssinn zur Senkrechten 18 um den in Fig. 2 gezeigten Winkel β geneigt. Aufgrund der Spannkraft der Schrauben bildet sich zwischen den Anlageflächen 16 und 17 eine Berührfläche. Die Zentrierung erfolgt mittels eines nicht dargestellten Stiftes, der in der Ausnehmung 4 anliegt.

In der Nähe der Rückseite 6 kann auf der Fläche 10 ein nicht dargestellter Vorsprung vorgesehen sein. Mit Hilfe dieses Vorsprungs kann eine zusätzliche Sicherung der Schneidplatte 1 gegen ungewolltes Herausrutschen aus dem Halter 5 erfolgen.

Alternativ zum oben beschriebenen Ausführungsbeispiel ist auch eine Ausgestaltung möglich, bei der nur eine einzige Ausnehmung 3 mit einer entsprechend angeordneten Längsachse 11 vorgesehen ist. Die entsprechende Zentrierung erfolgt durch entsprechende Anlageflächen des Halters, wobei die der Befestigung dienende Schraube die Schneidplatte 1 gegen den Halter 5 verspannt.

## Patentansprüche

1. Schneidplatte (1) mit einer Schneidkante (2), einer an diese angrenzenden, beim Schnitt die Spanfläche bildenden Oberseite (21), einer Unterseite (12), die von der Oberseite durch eine an die Schneidkante (2) angrenzende Vorderseite (25) getrennt ist, welche beim Schnitt die Freifläche bildet und gegenüber der Oberseite (21) zur Bildung eines Keilwinkels (γ) geneigt ist, einer der Vorderseite (25) entgegengesetzten Rückseite (6) sowie mit einer von der Oberseite (21) her zugänglichen, an einem Absatz (9) der Rückseite (6) angeordneten Klemmfläche (10) zum Spannen der Schneidplatte (1), wobei die Klemmfläche (10) gegenüber der Ebene der Oberseite (21) eine zum Neigungssinn der Freifläche gegenüber der Oberseite (21) gleichsinnige Neigung aufweist, dadurch gekennzeichnet, daß die Klemmfläche (10) auch eine zweite Neigung in zum ersten Neigungssinn zumindest näherungsweise senkrechtem Neigungssinn um einen Winkel (β) besitzt.

2. Schneidplatte nach Anspruch 1, dadurch gekennzeichnet, daß der Winkel (β) zwischen 10° und 30° hat.

3. Schneidplatte nach einem der vorhergehenden Ansprüche, dadurch gekennzeichnet, daß die Schneidplatte (1) auf ihrer Rückseite (6) eine Ausnehmung (3) aufweist, die zur Seite der Schneidkante (2) hin eine etwa zylinderförmige Außenfläche aufweist, die zwei Halbzylinder (7, 8) mit unterschiedlichen Durchmessern umfaßt, welche durch den Absatz (9), der die Klemmfläche (10) zum Spannen der Schneidplatte (1) bildet, unterbrochen sind.

4. Schneidplatte nach einem der vorhergehenden Ansprüche, dadurch gekennzeichnet, daß die Schneidplatte (1) an ihrer Rückseite (6) zwei Ausnehmungen (3) aufweist.

5. Schneidplatte nach einem der vorhergehenden Ansprüche, dadurch gekennzeichnet, daß an der Rückseite (6) der Schneidplatte (1) eine weitere nach hinten offene Ausnehmung (4) angeordnet ist.

6. Schneidplatte nach Anspruch 5, dadurch gekennzeichnet, daß sich die weitere Ausnehmung (4) in Spannrichtung verjüngt.

7. Schneidplatte nach Anspruch 6, dadurch gekennzeichnet, daß die weitere Ausnehmung (4) im oberen Bereich kegelförmig und im unteren Bereich zylinderförmig ist.

8. Schneidplatte nach einem der Ansprüche 5 bis 7, dadurch gekennzeichnet, daß die Längsachse (15) der weiteren Ausnehmung (4) etwas innerhalb der Schneidplatte (1) liegt und senkrecht zur Unterseite (12) der Schneidplatte (1) verläuft.

9. Schneidplatte nach einem der vorhergehenden Ansprüche, dadurch gekennzeichnet, daß die Flächen, die die Rückseite (6) der Schneidplatte (1) bilden, ballig sind.

10. Halter (5) mit einer Schneidplatte (1), wobei am Halter (5) eine Schraube zum Spannen der Schneidplatte (1) vorgesehen ist und an der Schneidplatte (1) eine Klemmfläche (10) an einem Absatz (9) angeordnet ist, an der im gespannten Zustand zumindest ein Teil der Unterseite des Kopfes der Schraube anliegt, wobei die Schneidplatte (1) eine an die Schneidkante (2) angrenzende Oberseite (21), eine Unterseite (12), die von der Oberseite durch eine an die Schneidkante (2) angrenzende Vorderseite (25) getrennt ist, welche beim Schnitt die Freifläche (25) bildet und gegenüber der Oberseite (21) zur Bildung eines Keilwinkels (γ) geneigt ist, und wobei die Klemmfläche (10) gegenüber der Ebene der Oberseite (21) eine zum Neigungssinn der Freifläche gegenüber der Oberseite (21) gleichsinnige Neigung aufweist, dadurch gekennzeichnet, daß die Klemmfläche (10) auch eine zweite Neigung in zum ersten Neigungssinn zumindest näherungsweise senkrechtem Neigungssinn um einen Winkel (β) besitzt.
